Europäisches Patentamt

European Patent Office

Office européen des brevets

(19)

(11) Veröffentlichungsnummer: **0 108 165 B1**

(12) **EUROPÄISCHE PATENTSCHRIFT**

(45) Veröffentlichungstag der Patentschrift:
27.01.88

(21) Anmeldenummer: **82110942.8**

(22) Anmeldetag: **26.11.82**

(51) Int. Cl.⁴: **G 01 B 5/00,** G 01 B 5/03,
G 01 B 21/04

(54) Spitzenbock.

(30) Priorität: **07.10.82 DE 3237083**

(43) Veröffentlichungstag der Anmeldung:
**16.05.84 Patentblatt 84/20**

(45) Bekanntmachung des Hinweises auf die Patenterteilung:
**27.01.88 Patentblatt 88/4**

(84) Benannte Vertragsstaaten:
**CH DE FR GB IT LI SE**

(56) Entgegenhaltungen:
**DE - A - 2 558 625
DE - A - 3 106 701
DE - C - 1 010 802
DE - C - 2 450 322
US - A - 1 357 696
US - A - 3 071 862**

(73) Patentinhaber: **Firma Carl Zeiss, D-7920 Heidenheim (Brenz) (DE)**

(72) Erfinder: **Herzog, Klaus, Kopernikusstrasse 42, D-7082 Oberkochen (DE)**
Erfinder: **Gentner, Gabriele, Gewandweg 4, D-7080 Ebnat b.Aalen (DE)**
Erfinder: **Szenger, Franz, Dipl.-Ing., Wielandstrasse 14, D-7923 Königsbronn (DE)**

EP 0 108 165 B1

## Beschreibung

Als Halterung für drehbeweglich aufgespannte, zylindrische Werkstücke wie z.B. Zahnräder finden an Bearbeitungsmaschinen bzw. Messeinrichtungen sogenannte «Reitstöcke» oder «Spitzenböcke» Verwendung. Damit wird das Werkstück zumindest an einer Seite durch eine Spitze in der Drehachse des Werkstücks gespannt. Bei derartigen Halterungen ist die dem Drehantrieb entgegengesetzte Aufnahmespitze, im folgenden Gegenspitze genannt, in Richtung der Drehachse verschiebbar, um ein Einspannen von Werkstücken mit unterschiedlicher Achslänge zu ermöglichen. In der Regel ist diese Spitze an einem ausserhalb der Drehachse parallel zu dieser längsgeführten Ausleger befestigt (vgl. US-A-1 357 696, US-A-3 071 862).

Da die gegenüberliegenden Spitzen des Spitzenbockes die Lage der Drehachse des zu bearbeitenden oder zu vermessenden Werkstückes festlegen, soll die am verstellbaren Ausleger befestigte Gegenspitze für alle Aufspannabstände reproduzierbar exakt auf einer vorgegebenen Geraden liegen. Zulässige Toleranzen können dabei im Mikrometer- oder Submikrometerbereich liegen.

Diese Forderung ist jedoch in der Regel nicht ohne besondere Massnahmen zu erfüllen. Fehlerquellen bilden einmal die Führung des Auslegers, die sehr präzise gearbeitet sein muss, da Drehungen um die Längsachse der Führungssäule sich um die Länge des Auslegers übersetzt auf die Position der Gegenspitze auswirken. Zum anderen können infolge von thermischen Effekten Längenänderungen des Auslegers auftreten, aufgrund derer sich die Gegenspitze verschiebt. Eine weitere Fehlerquelle ist in der Befestigung des Spitzenbockes an der Maschine zu sehen.

Spitzenböcke bilden einen festen Bestandteil der Maschine, an die sie angebaut sind. Sofern sie abnehmbar befestigt sind, ist nach dem Anbau bzw. Wiederanbau die Gegenspitze exakt auf die Verlängerung der Drehachse der Bearbeitungs- bzw. Messeinrichtung einzustellen und die Führung des Auslegers parallel zu dieser Achse auszurichten. Diese Justierarbeiten erfordern relativ viel Zeit und verkürzen die Standzeit der betreffenden Maschine.

Es sind nun Universalbearbeitungs- und Messmaschinen bekannt, die nicht ausschliesslich zur Bearbeitung zylindrischer Werkstücke dienen. Dort schränkt ein nur für zylindersymmetrische Werkstücke benötigter Spitzenbock den Arbeitsbereich der Maschine stark ein, wenn er nicht benötigt ist, da der Ausleger mit der Gegenspitze in den Fahrweg der beweglichen Schlitten der Maschine hineinragt. Andererseits ist ein Entfernen und Wiederanbauen des Spitzenbockes mit den vorstehend genannten Justierarbeiten verbunden.

Es ist die Aufgabe der vorliegenden Erfindung einen Spitzenbock so aufzubauen, dass Justierarbeiten zur Nachstellung der Lage der Gegenspitze bei einem Werkstückwechsel weitgehend entfallen können.

Diese Aufgabe lässt sich in drei Teilaufgaben gliedern, nämlich

1. Regenerierung bzw. Beibehaltung der zur Drehachse exakt parallelen Ausrichtung der Führung des Auslegers, auch wenn dieser aus dem Arbeitsbereich der Maschine entfernt wird.

2. Kompensation von Längenänderung des Auslegers aufgrund thermischer Effekte.

3. Realisierung einer hochgenauen Führung für den Ausleger, die unempfindlich gegen Querkräfte ist.

Die Lösung dieser drei Teilaufgaben erfolgt jeweils durch eine Ausbildung des Spitzenbockes gemäss den Ansprüchen 1, 8 und 11.

Bei Spitzenböcken mit den Merkmalen des Anspruchs 1 kann die Führungssäule für den Ausleger der Spitze am Rande oder ganz ausserhalb des Arbeitsbereiches der betreffenden Maschinen angeordnet werden und bleibt beim Ausschwenken des Auslegers raumfest, d.h. die Parallelität von Führung und Drehachse bleibt in jedem Fall erhalten. Dadurch, dass der Endbereich der Führung verschwenkbar bzw. verdrehbar ist, benötigt der Ausleger selbst kein Gelenk, das auf die Lagegenauigkeit der Spitze Einfluss hätte. Der Formschluss zwischen Ausleger, Führung und Maschinenbett wird also jedesmal dann, wenn der Ausleger aus der Hilfsführung in die Hauptführung eingefahren wird wieder exakt hergestellt.

Zur Führung des Auslegers ist ein Gleitlager vorgesehen, das die Merkmale des Anspruchs 11 besitzt. Mit diesem Aufbau wird erreicht, dass anstelle der in üblichen Gleitlagern bei Kräften senkrecht zur Führungsrichtung sonst auftretenden Gleitreibung zwischen der prismatischen Führung und dem geführten Teil nun Rollreibung auftritt. Dies hat zur Folge, dass der Ausleger beim Wegfall der Querkraft mit einer um das Verhältnis der Reibwerte für rollende und gleitende Reibung höheren Genauigkeit in seine Ruhelage zurückkehrt.

Dabei tritt auch eine geringfügige Bewegung der Rollen relativ zu dem geführten Teil, d.h. zu dem Lager des Auslegers auf. Die Rollen sind daher vorzugsweise mit einer elastischen Klebmasse am geführten Teil fixiert, die in den in Frage stehenden, geringen Bewegungsbereichen nachgibt. Eine andere Möglichkeit zur Fixierung der Rollen ist deren Aufnahme in elastische Rollenkäfige.

Zur Kompensation von thermischen Längenänderungen des Auslegers dient, wie in Anspruch 8 ausgeführt, ein Hebelgetriebe, das einen Dehnkörper aus Material mit im Vergleich zum Ausleger abweichenden thermischen Ausdehnungskoeffizienten enthält. Dieser Dehnkörper stützt sich gegen den gelenkig am Ausleger befestigten Halter der Aufnahmespitze ab.

Bei dieser Ausführung kann durch eine geeignete Wahl der Abstände zwischen dem Angriffspunkt des Dehnkörpers, dem Gelenk der Aufnahme im Ausleger und der Spitze, abgestimmt auf die Materialien für Ausleger und Dehnkörper, immer sichergestellt werden, dass die Spitze auch bei grösseren Temperaturschwankungen ihre Position ortsfest beibehält.

Zweckmässig wird dann die Spitze als Kugelspitze ausgebildet, bei der die infolge der Kompensationsbewegungen kleinen Kippungen des Halters der Spitze unbeachtlich bleiben können, wenn sichergestellt ist, dass das Kippzentrum mit dem Kugelmittelpunkt zusammenfällt.

Zwar sind Einrichtungen zur Kompensation von thermischen Längenänderungen an sich bekannt. Zu nennen sind in diesem Zusammenhang die Pendel von Regulatoren sowie Einrichtungen an Bohrmaschinen, wie sie in der DE-C-1 010 802, der DE-C-2 450 322, der DE-A-2 558 625 und DE-A-3 106 701 beschrieben sind. Bei den bekannten Einrichtungen zur Kompensation sind jedoch Stäbe aus Materialien mit unterschiedlichen Ausdehnungskoeffizienten im Sinne einer Serienschaltung aneinander befestigt, so dass der meist als Referenzmarke dienende, lagestabilisierte Endbereich aufgrund der relativ grossen Länge der oft zweifach gefalteten Anordnung äusserst labil gegenüber Querkräften ist. Demgegenüber besteht das Hebelgetriebe in der vorliegenden Erfindung aus nach Art einer Reihenschaltung miteinander verbundenen Stäben bzw. Leisten unterschiedlicher Wärmeausdehnung. Von dieser Anordnung werden auch die beim Klemmen des Werkstücks auftretenden Querkräfte senkrecht zur Auslegerlängsachse gut aufgenommen.

Es ist vorteilhaft, wenn der Ausleger des Spitzenbockes eine einstellbare Klemmvorrichtung zum Aufbringen einer konstanten Spannkraft auf die Aufnahmespitze enthält. Denn da die Haltekraft der Spitze auf die Führung des Auslegers rückwirkt, haben konstante Kraftverhältnisse auf die Reproduzierbarkeit der Lage der Spitze d.h. deren Positioniergenauigkeit einen positiven Effekt.

Ausserdem ist es zweckmässig, wenn der Führung des Auslegers in der Ebene des Auslegers d.h. in der durch die Führung und die Drehachse aufgespannten Ebene sichelförmig deformiert ist. Die Biegespannung, die diese Deformation verursacht, kann so gewählt werden, dass sie entgegengesetzt gleich dem von der Klemmvorrichtung über den Ausleger auf die Führung ausgeübten Biegemoment ist, so dass dann die Führung im belasteten Zustand, d.h. bei Klemmung des Werkstücks, stets parallel zur Werkstückachse ausgerichtet ist. Eine Verbiegung der Führung im unbelasteten Zustand ist dagegen für die genaue Ausrichtung des Werkstücks, auf die es allein ankommt, völlig irrelevant.

Zur Stabilisierung der Führung des Auslegers und zum Einstellen der Deformation sind zweckmässig im Innern des prismatisch ausgebildeten Führungskörpers Zug- bzw. Druckstangen angeordnet.

Da es sich bei dem Lager des Auslegers in Führungsrichtung um ein Gleitlager handelt, kann dieses selbsthemmend ausgeführt werden, d.h. Einleitung der Spannkraft der Spitze auf das Werkstück mit Hilfe der vorgenannten Spannvorrichtung tritt aufgrund des grossen Abstandes zwischen dem Kraftangriffspunkt und der Führung des Auslegers Selbsthemmung ein, so dass ein separates Klemmen der Führung entfällt.

In der Nähe der Führung durch die Bedienperson eingeleitete Kräfte zur Verschiebung des Auslegers bewirken keine Selbsthemmung. Ordnet man dort, in der Nähe der Führungssäule am Ausleger einen Griff an, mit dem die Spannkraft der Gegenspitze ausgelöst wird, ergibt sich der Vorteil, dass sowohl das Verfahren des Auslegers, das Spannen des Werkstücks und das Klemmen der Führung mit diesem einzigen Bediengriff ausgeführt werden kann.

Im folgenden werden Ausführungsbeispiele der Erfindung anhand der Fig. 1–12 der beigefügten Zeichnungen näher erläutert:

Fig. 1 stellt die Seitenansicht eines auf einer Messmaschine befestigten Spitzenbockes dar;

Fig. 2 stellt den Spitzenbock aus Fig. 1 in Aufsicht dar;

Fig. 3–5 stellen Prinzipskizzen des Spitzenbockes aus Fig. 1 dar, unter überhöhter Darstellung der Deformationen der Führungssäule;

Fig. 6 ist ein detaillierterer Schnitt der Führungssäule aus Fig. 4;

Fig. 7 zeigt die Abschlussplatte 22 der Führungssäule aus Fig. 6 in Aufsicht;

Fig. 8 ist eine detailliertere Darstellung des Spitzenbockes aus Fig. 1 mit Klemmvorrichtung;

Fig. 9 ist eine detailliertere Ansicht der Führung des Auslegers des Spitzenbockes aus Fig. 1 bzw. Fig. 8;

Fig. 10 ist eine Schnittzeichnung der Führung aus Fig. 9 in der Ebene senkrecht zur Führungsrichtung;

Fig. 11 ist die Ansicht einer leicht abgewandelten Variante des Auslegers des Spitzenbockes aus Fig. 1 mit einer Einrichtung zur Kompensation der thermischen Längenausdehnung;

Fig. 12 zeigt den Ausleger aus Fig. 11 in Aufsicht.

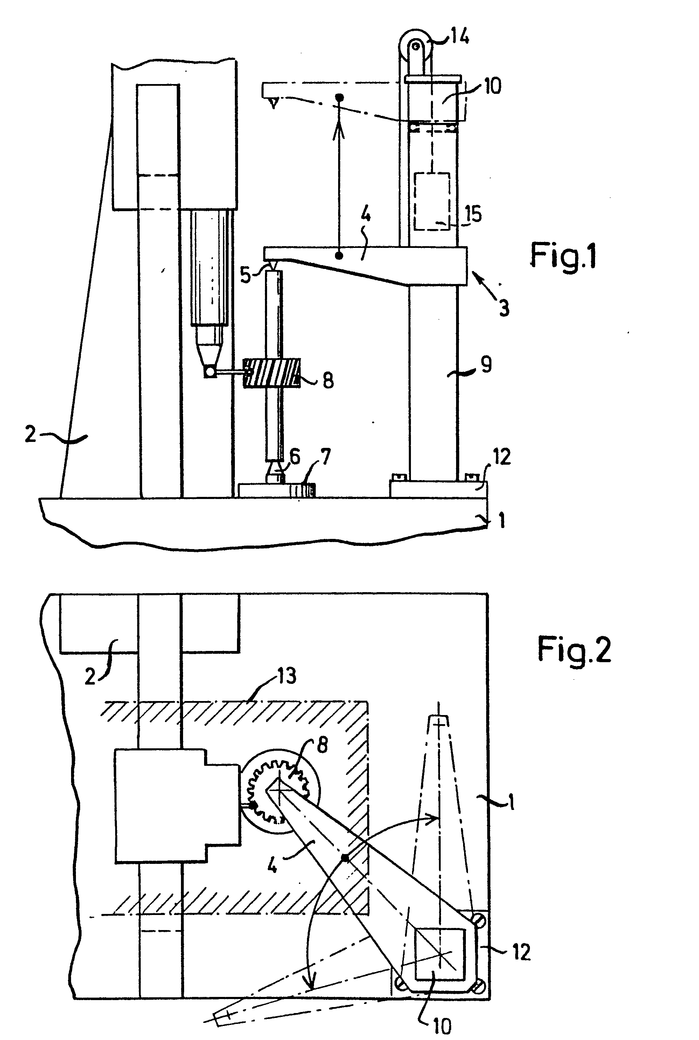

Der in Fig. 1 und 2 gezeigte Spitzenbock 3 ist mit seiner Grundplatte 12 auf der ebenen Arbeitsfläche eines Granittisches 1 montiert, der das verfahrbare Portal 2 einer Mehrkoordinatenmessmaschine trägt. Mit 13 ist in Fig. 2 der schraffiert dargestellte, nutzbare Messbereich der Messmaschine bezeichnet.

Der Spitzenbock 3 besteht aus einer Führungssäule 9, an der der Ausleger 4 mit Hilfe einer Rolle 14 und eines in der quadratischen Führungssäule 9 beweglichen Gegengewichtes 15 leichtgängig in der Höhe verstellbar geführt ist. Der Ausleger 4 trägt die Gegenspitze 5 zu der auf einem Drehtisch 7 im Granitbett 1 der Maschine befestigten Spitze 6. Zwischen den Spitzen 5 und 6 ist das Werkstück 8 eingespannt.

Der Endbereich 10 der Führung 9 ist um die Längsachse der Führungssäule 9 drehbar gelagert. Wie durch die gestrichelt eingezeichneten Positionen des Auslegers 4 in Fig. 1 und 2 angedeutet ist, kann der Ausleger nach Aufschieben auf den als Hilfsführung ausgebildeten Endbereich 10 der Säule 9 zusammen mit diesem Teil 10 der Säule geschwenkt und damit aus dem Arbeitsbereich 13 der Messmaschine 2 entfernt werden. Nach jedem Zurückschwenken in die Arbeitsposition und Wiederaufschieben auf die Führung 9 liegt die Spitze 5 wieder exakt auf der Drehachse des Werkstückes 8, da die Position der Säule 9 beim Schwenkvorgang nicht geändert und die Parallelität zwischen Führungssäule 9 und der Achse des Werkstückes 8 vielmehr beibehalten wird.

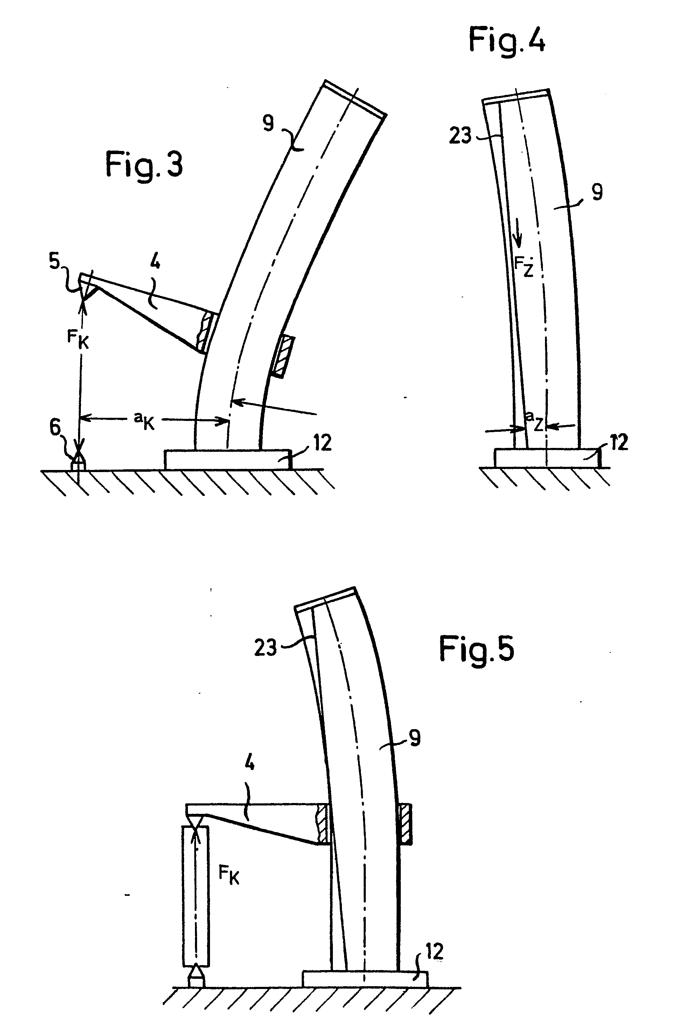

Beim Spannen des Werkstückes 8 wirkt eine Kraft $F_k$ auf die Spitze 5, die über den Ausleger 4 die Führungssäule 9 verbiegt, wie dies in Fig. 3 überhöht skizziert ist. Das auf die Säule 9 ausgeübte Biegemoment $M_k$ berechnet sich zu

$$M_k = a_k \cdot F_k,$$

wobei $a_k$ der Abstand der Spitze 5 zur Führungssäule 9 ist. Dieses Biegemoment $M_k$ ist unabhängig von der Stellung des Auslegers 4.

Ein solches konstantes Biegemoment M lässt sich auch durch die Zugkraft $F_z$ einer zwischen Deckel und Boden der Führungssäule 9 im Abstand $a_z$ zur Mitte der Säule 9 gespannten Zugstange 23 einleiten (siehe Fig. 4). Sorgt man dafür, dass die Produkte $F_k \cdot a_k$ und $F_z \cdot a_z$ den gleichen Betrag aber entgegengesetztes Vorzeichen besitzen, dann lässt sich die Verformung der Führungssäule 9 aufgrund der Spannkraft $F_k$ im Bereich zwischen der Grundplatte 12 und dem Ausleger 4 sehr gut kompensieren (siehe Fig. 5).

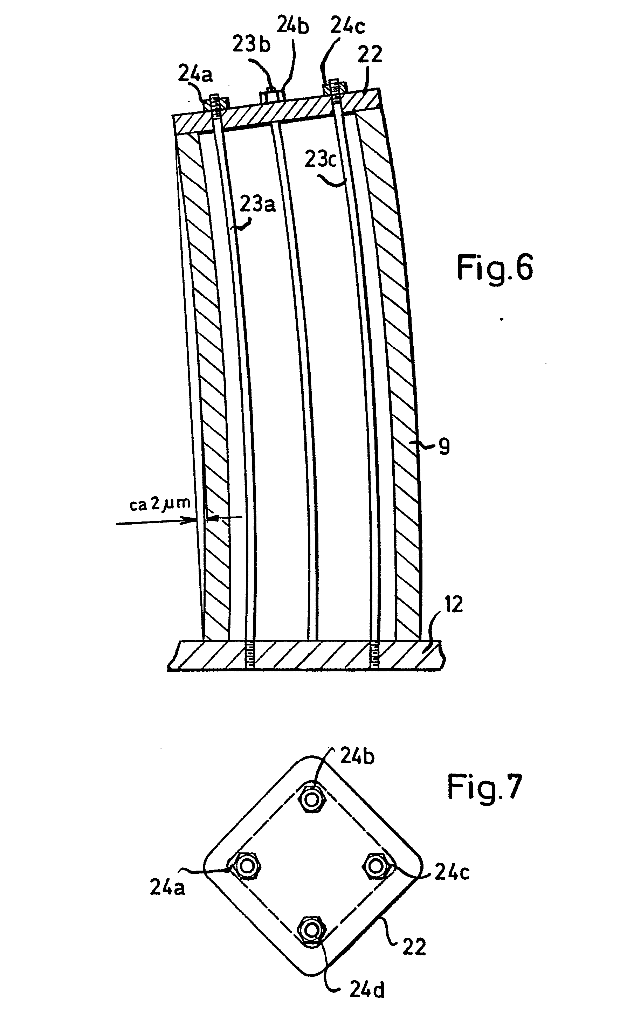

Die Führungssäule 9 besitzt daher in ihrem Inneren vier Zugstangen 23a–d in der in Fig. 6 und 7 skizzierten Anordnung. Die Zugstangen 23 sind in die Grundplatte 12 eingeschraubt und ihre Länge kann mit Hilfe von Muttern 24a–d verkürzt werden.

Mit Hilfe dieser Zugstangen wird die Säule 9 in zwei Raumrichtungen exakt ausgerichtet, nicht nur bezüglich der vorstehend erklärten Deformation gegen die Werkstückachse sondern auch zur Korrektur von Restfehlern der Führungsbahnen der Säule 9 in der Richtung der Verbindungslinie der Stangen 23b und 23d.

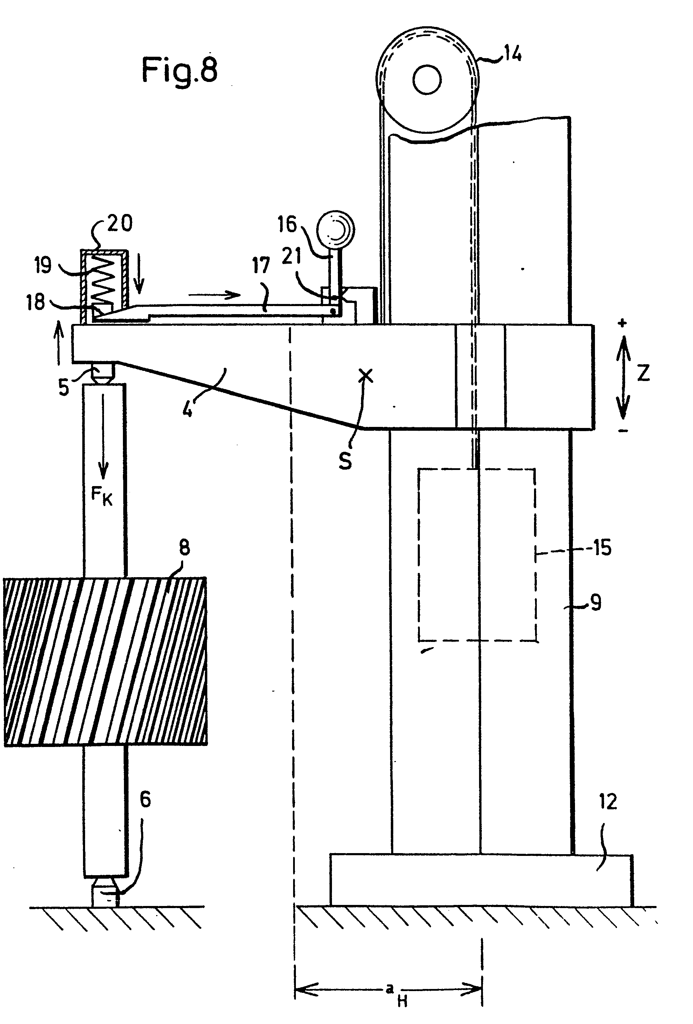

In Fig. 8 ist die Einrichtung dargestellt, mit deren Hilfe die konstante Spannkraft $F_k$ zwischen den Spitzen 5 und 6 auf das Werkstück 8 aufgebracht wird. Diese Einrichtung besteht aus einer sich gegen das Gehäuseteil 20 des Auslegers 4 abstützende Feder 19, deren Federkraft $F_k$ von einem Bedienhebel 16 freigegeben werden kann, der in der Nähe der Führung 9 angeordnet ist. Die Bewegung des um die Achse 21 schwenkbar gelagerten Bedienhebels 16 wird von einem Gestänge 17 auf einen Keil 18 übertragen, auf dem der hintere Teil der Spitze 5 ruht.

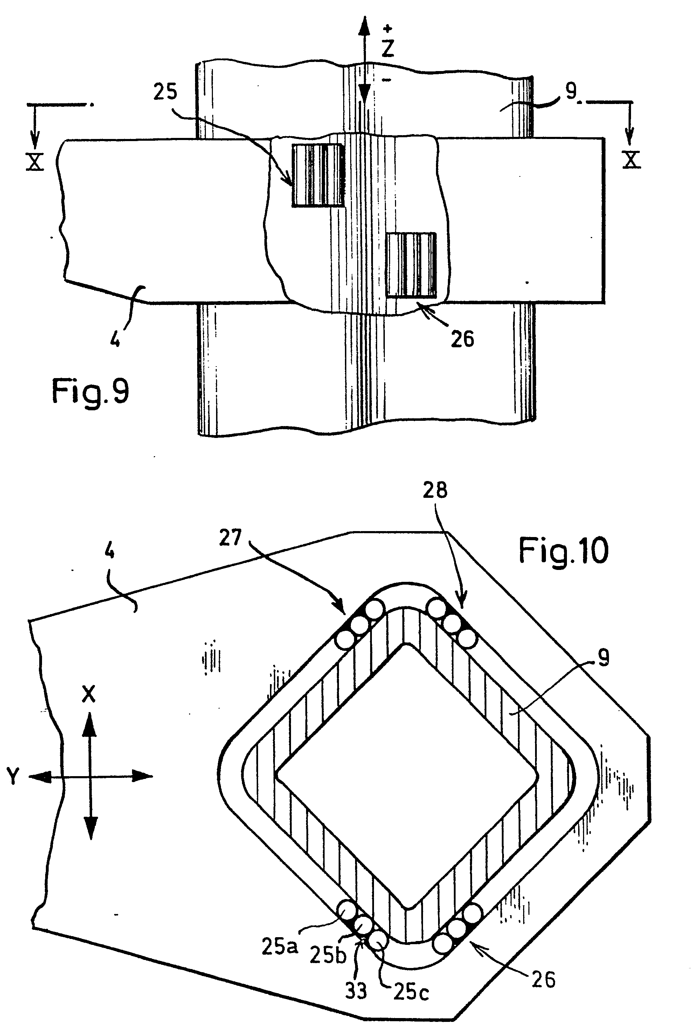

Die Führung des Auslegers 4 erfolgt über ein Gleitlager, das als Lagerkörper vier Gruppen 25–28 zu je drei Rollen besitzt (Fig. 9 und 10). Diese Rollen sind mit ihrer Längsachse parallel zur Führungsrichtung angeordnet und befinden sich unter Vorspannung in dem Spalt zwischen der Führungssäule 9 und dem darum gelegten Lager des Auslegers 4.

Die Rollen 25a–28c sind jeweils mit einer elastischen Klebmasse am Ausleger 4 fixiert und ermöglichen damit ein nahezu reibungsfreies, d.h. sehr exaktes Rückkehren des Auslegers 4 in seine Ruhelage nach einer Verdrehung des Lagers beispielsweise aufgrund von Querkräften, die auf den Ausleger wirken.

Die parallele Anordnung jeweils dreier Rollen wurde gewählt, da die gegenüber nur einer Rolle vergrösserte Auflagefläche der Gleitkörper die Mikrogeometrie der Führung besser integriert.

Infolge der in Fig. 9 skizzierten, versetzten Anordnung der Rollentripel 25/27 und 26/28 der von der Spitze 5 aus gesehen vorderen und hinteren Lagerteile tritt eine Selbsthemmung dieses Lagers gerade dann ein, wenn auf die Spitze 5 zu gerichtete Kräfte auftreten, und der Kraftangriffspunkt ausserhalb des in Fig. 8 mit $a_H$ bezeichneten Abstandes vom Mittelpunkt der Führung 9 liegt. Diese Bedingung ist beim Spannvorgang erfüllt, jedoch nicht bei einem Verschieben des Auslegers 4 durch eine am Hebel 16 angreifende Bedienperson. Letztere ist also in der Lage allein über den Hebel 16 den Ausleger 4 frei in der Höhe zu verstellen und durch Verschwenken des Hebels die Spannkraft freizugeben, wodurch sich die Führung des Auslegers 4 selbsttätig klemmt.

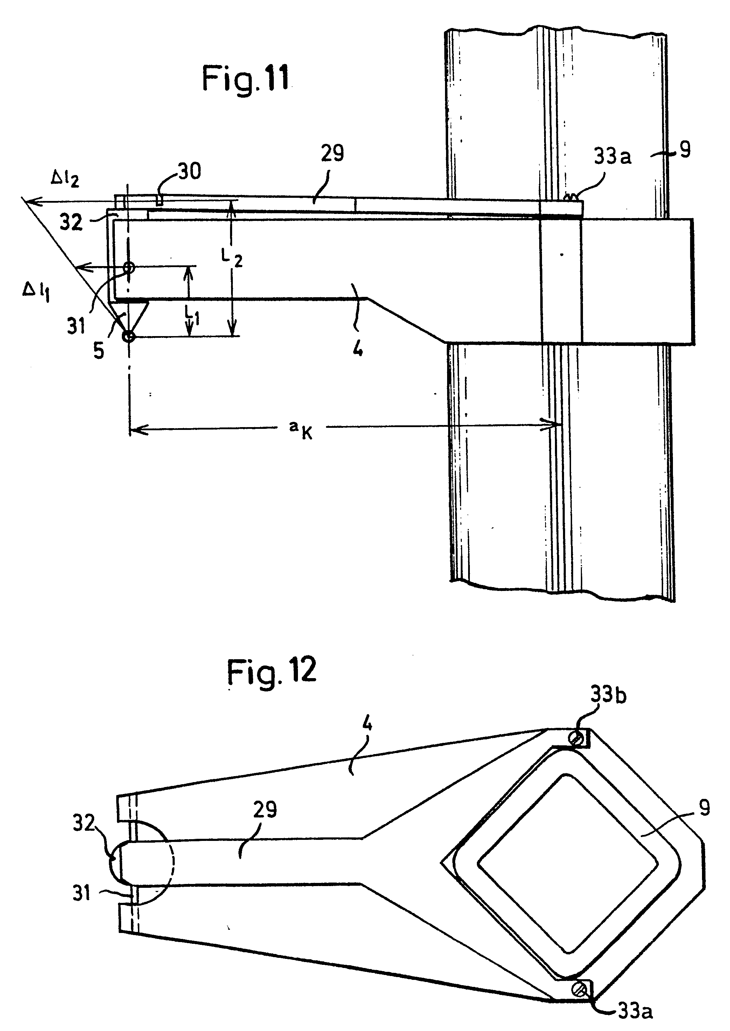

In den Figuren 11 und 12 ist eine Einrichtung zur thermischen Längenstabilisierung des Auslegers 4 dargestellt; diese Einrichtung wurde in der Fig. 8 aus Gründen der vereinfachten Darstellung ebenso weggelassen, wie die Klemmvorrichtung nach Fig. 8 in den Figuren 11 und 12 fehlt. Selbstverständlich ist es ohne weiteres möglich den Ausleger 4 mit beiden Einrichtungen gleichzeitig auszurüsten.

Eine Längsstabilisierung des Auslegers 4 kann insbesondere dann wichtig werden, wenn der Tisch 1 der in Fig. 1 gezeigten Maschine aus Material mit im Vergleich zum Ausleger abweichenden Wärmeausdehnungskoeffizienten besteht, oder wenn die Wärmekapazität des Tisches 1 so viel grösser als die des Auslegers 4 ist, dass sich Temperaturschwankungen praktisch nur auf die Länge des Auslegers 4 auswirken.

Um die Lage der Spitze 5 raumfest zu halten, d.h. ihren Abstand $a_k$ von der Mitte der Säule 9 konstant zu halten, ist der Träger 32 der Spitze 5 gelenkig über die Achse 31 in einer gabelförmigen Ausnehmung im Ausleger 4 befestigt. Der Ausleger 4 besteht aus Stahl. Gegen das der Spitze 5 entgegengesetzte Ende des Trägers 32 stützt sich eine im wesentlichen parallel zum Ausleger 4 angeordnete Leiste 29 aus Aluminium ab, deren anderes Ende in den Punkten 33a und 33b auf den Ausleger 4 aufgeschraubt ist.

Durch die Nut 30 ist an dieser Stelle der Leiste 29 der Querschnitt stark eingeengt. Die Nut 30 dient dazu auch die Leiste 29 mit einem Drehpunkt zu versehen.

Ändert nun der Ausleger 4 seine Länge um den Betrag $\Delta l_1$ aufgrund thermischer Ausdehnung, so wird sich die Leiste 29 aufgrund des im Vergleich zum Ausdehnungskoeffizienten $\alpha_1$ von Stahl grösseren Ausdehnungskoeffizienten $\alpha_2$ von Aluminium um die Länge $\Delta l_2$ ausdehnen. Falls dafür gesorgt ist, dass die Abstände $L_1$ zwischen dem

Mittelpunkt der Kugel der Spitze 5 und der Achse 31 und $L_2$ zwischen dem Kugelmittelpunkt und dem Angriffspunkt der Leiste 29 in Bedingung:

$$\frac{L_1}{L_2} = \frac{\alpha_1}{\alpha_2}$$

erfüllen, ist die Lage der Kugelspitze 5 temperaturinvariant, d.h. der Abstand $a_t$ zwischen Spitze und Führung bleibt konstant. Dabei ist vorausgesetzt, dass die Leiste 29 die gleiche Länge wie der Ausleger 4 besitzt und beide Teile jeweils die gleiche Temperatur annehmen.

Natürlich arbeitet die beschriebene Einrichtung zur Längenstabilisierung auch dann, wenn die Längen der Leiste 29 und den Ausleger 4 unterschiedlich sind. Dann gilt jedoch nicht mehr der genannte, einfache Zusammenhang zwischen den Abständen der Drehpunkte und den Ausdehnungskoeffizienten.

Die Spitze 5 ist als Kugelspitze ausgebildet. Damit wird erreicht, dass die kleinen Kippungen der Spitze 5 infolge der Kompensationsbewegungen auch bei Werkstücken mit grossen Zentrierbohrungen ohne nennenswerten Einfluss auf die Werkstücklage bleiben, denn die Anlagepunkte zwischen Werkstück und Kugeloberfläche liegen etwa in gleicher Höhe wie der temperaturinvariante Kugelmittelpunkt.

**Patentansprüche**

1. Spitzenbock zur Halterung eines zwischen einer Aufnahmespitze (5) und einer Gegenspitze (6) drehbeweglich aufgespannten Werkstückes (8), mit einem in einer Längsführung (9) geführten Ausleger (4), der die Aufnahmespitze (5) trägt, dadurch gekennzeichnet, dass das Ende der Längsführung (9) in einem von dem geführten Teil des Auslegers (4) eingenommenen Bereich (10) als gegen den übrigen Teil der Längsführung (9) drehbar gelagerte Hilfsführung ausgebildet ist.

2. Spitzenbock nach Anspruch 1, dadurch gekennzeichnet, dass der Ausleger (4) eine auslösbare Spannvorrichtung (19, 20) zum Aufbringen einer konstanten Andruckkraft (Fk) auf die Aufnahmespitze (5) enthält.

3. Spitzenbock nach Anspruch 1–2, dadurch gekennzeichnet, dass die Längsführung (9) des Auslegers (4) in der Ebene des Auslegers (4) durch ein einstellbares, mechanisches Biegemoment (M) sichelförmig deformiert ist.

4. Spitzenbock nach Anspruch 2–3, dadurch gekennzeichnet, dass das voreingestellte Biegemoment (M) der Längsführung (9) dem von der Spannvorrichtung (19, 20) über den Ausleger (4) nach Spannung des Werkstücks (8) auf die Längsführung (9) ausgeübten Biegemoment (Mk) entgegengerichtet ist.

5. Spitzenbock nach Anspruch 3–4, dadurch gekennzeichnet, dass die Längsführung (9) prismatisch ausgebildet ist, wobei im Innern derselben Zug- bzw. Druckstangen (23) zur Ausrichtung bzw. Deformation der Führungsbahn angeordnet sind.

6. Spitzenbock nach Anspruch 2–5, dadurch gekennzeichnet, dass die Spannvorrichtung (19, 20) mit einem in der Nähe der Längsführung (9) angeordneten Auslöser (16) mechanisch gekoppelt ist und der Ausleger (4) durch ein Gleitlager (25–28) geführt ist.

7. Spitzenbock nach Anspruch 1–6, dadurch gekennzeichnet, dass das Gewicht des Auslegers (4) durch ein im Innern seiner Längsführung (9) befindliches Gegengewicht (15) kompensiert wird.

8. Spitzenbock zur Halterung eines zwischen einer Aufnahmespitze (5) und eine Gegenspitze (6) drehbeweglich aufgespannten Werkstückes (8), mit einem in einer Längsführung (9) geführten Ausleger (4), der die Aufnahmespitze (5) trägt, gekennzeichnet durch eine Einrichtung zur Kompensation der thermischen Längsausdehnung des Auslegers (4) in Form eines Hebelgetriebes, das einen Dehnkörper (29) aus Material mit dem Vergleich zum Material des Auslegers (4) abweichenden thermischen Längenausdehnungskoeffizienten enthält, wobei sich der Dehnkörper (29) gegen einen gelenkig am Ausleger (4) befestigten Träger (32) der Aufnahmespitze (5) abstützt.

9. Spitzenbock nach Anspruch 8, dadurch gekennzeichnet, dass der Dehnkörper (29) mit einem Ende an dem Ausleger (4) befestigt ist und mit dem anderen Ende gelenkig mit dem Träger (32) der Aufnahmespitze (5) verbunden ist.

10. Spitzenbock nach Anspruch 8–9, dadurch gekennzeichnet, dass die Aufnahmespitze (5) als Kugelspitze ausgebildet ist.

11. Spitzenbock zur Halterung eines zwischen einer Aufnahmespitze (5) und einer Gegenspitze (6) drehbeweglich aufgespannten Werkstückes (8), mit einem in einer Längsführung (9) geführten Ausleger (4), der die Aufnahmespitze (5) trägt, dadurch gekennzeichnet, dass zur Führung des Auslegers (4) ein Gleitlager (25–28) vorgesehen ist, das als Gleitkörper Rollen (25a, b, c) enthält, deren Längsachsen parallel zur Führungsrichtung verlaufen und die senkrecht zur Führungsrichtung nachgiebig am geführten Teil des Auslegers (4) fixiert sind.

12. Spitzenbock nach Anspruch 11, dadurch gekennzeichnet, dass die Rollen (25a, b, c–28a, b, c) mit einer elastischen Klebmasse am geführten Teil des Auslegers (4) fixiert sind.

**Claims**

1. Centre support for mounting a workpiece (8) rotatably held between a holding centre (5) and a counter-centre (6), having a crossbeam (4), guided in a longitudinal guide (9), which carries the holding centre (5), characterised in that the end of the longitudinal guide (9) in an area occupied by the guided part of the crossbar (4) is constructed as an auxiliary guide mounted so as to be rotatable with respect to the remainder of the longitudinal guide (9).

2. Centre support as claimed in claim 1, characterised in that the crossbeam (4) comprises a releasable clamping device (19, 20) for applying a constant pressing force (Fk) to the holding centre (5).

3. Centre support as claimed in claims 1–2, characterised in that the longitudinal guide (9) for the crossbeam (4) is deformed in a crescent shape in the plane of the crossbeam (4) by an adjustable mechanical bending moment (M).

4. Centre support as claimed in claims 2–3, characterised in that the pre-set bending moment (M) of the longitudinal guide (9) is directed counter to the bending moment (Mk) exerted on the longitudinal guide (9) by the clamping device (19, 20) via the crossbeam (4) after clamping of the workpiece (8).

5. Centre support as claimed in claims 3–4, characterised in that the longitudinal guide (9) is prismatic in construction, and inside it are tension or compression rods (23) for straightening or deformation of the guideway.

6. Centre support as claimed in claims 2–5, characterised in that the clamping device (19, 20) is mechanically coupled to a release (16) located in the vicinity of the longitudinal guide (9) and the crossbeam (4) is guided by a slide bearing (25–28).

7. Centre support as claimed in claims 1–6, characterised in that the weight of the crossbeam (4) is compensated by a counterweight (15) situated inside its longitudinal guide (9).

8. Centre support for mounting a workpiece (8) rotatably held between a holding centre (5) and a counter-centre (6), having a crossbeam (4), guided in a longitudinal guide (9), which carries the holding centre (5), characterised by means for compensating the thermal longitudinal expansion of the crossbeam (4) in the form of a lever transmission which comprises an expansion member (29) consisting of material with a different thermal expansion coefficient from the material of the crossbeam (4), whilst the expansion member (29) is supported against a carrier (32) of the holding centre (5), said carrier being hingedly mounted to the crossbeam (4).

9. Centre support as claimed in claim 8, characterised in that the expansion member (29) is fixed to the crossbeam (4) at one end and is hingedly connected to the carrier (32) of the holding centre (5) at the other end.

10. Centre support as claimed in claims 8–9, characterised in that the holding centre (5) is constructed as a spherical centre.

11. Centre support for clamping a workpiece (8) rotatably held between a holding centre (5) and a counter-centre (6), having a crossbeam (4), guided in a longitudinal guide (9), which carries the holding centre (5), characterised in that, for guiding the crossbeam (4), a slide bearing (25–28) is provided which contains, as slide members, rollers (25a, b, c) the longitudinal axes of which extend parallel to the direction of guiding and which at right angles to the direction of guiding are resiliently fixed to the guided part of the crossbeam.

12. Centre support as claimed in claim 11, characterised in that the rollers (25a, b, c–28a, b, c) are fixed to the guided part of the crossbeam (4) by means of an elastic adhesive composition.

## Revendications

1. Poupée à pointes pour maintenir une pièce (8) serrée avec possibilité de déplacement entre une pointe réceptrice (5) et une contre-pointe (6), comportant un support (4) guidé dans un guide longitudinal (9), qui porte la pointe réceptrice (5), caractérisée en ce que l'extrémité du guide longitudinal (9) est agencée, dans une zone (10) reçue par la partie guidée du support (4), sous la forme d'un guide auxiliaire monté de façon tournante par rapport à la partie restante du guide longitudinal (9).

2. Poupée à pointes selon la revendication 1, caractérisée en ce que le support (4) comporte un dispositif de serrage déclenchable (19, 20) pour exercer une force d'application constante (Fk) sur la pointe réceptrice (5).

3. Poupée à pointes selon les revendications 1 et 2, caractérisée en ce que le guide longitudinal (9) du support (4) est déformé en forme de croissant dans le plan du support (4) par un moment de flexion mécanique réglable (M).

4. Poupée à pointes selon les revendications 2 et 3, caractérisée en ce que le moment de flexion préréglé (M) du guide longitudinal (9) est orienté en sens opposé au moment de flexion (Mk) exercé par le dispositif de serrage (19, 20) par l'intermédiaire du support (4) après fixation de la pièce (8) sur le guide longitudinal (9).

5. Poupée à pointes selon les revendications 3 et 4, caractérisée en ce que le guide longitudinal (9) a une forme prismatique, à l'intérieur de laquelle sont disposées des barres de traction ou de compression (23) pour l'alignement ou la déformation de la voie de guidage.

6. Poupée à pointes selon les revendications 2 à 5, caractérisée en ce que le dispositif de serrage (19, 20) est accouplé mécaniquement avec un déclencheur (16) disposé au voisinage du guide longitudinal (9) et le support (4) est guidé au moyen d'un palier glissant (25–28).

7. Poupée à pointes selon les revendications 1–6, caractérisée en ce que le poids du support (4) est compensé par un contrepoids (15) situé à l'intérieur de son guide longitudinal (9).

8. Poupée à pointes pour maintenir une pièce (8) serrée avec possibilité de rotation entre une pointe réceptrice (5) et une contre-pointe (6), comportant un support (4) guidé dans un guide longitudinal (9) qui porte la pointe réceptrice (5), caractérisée par un dispositif de compensation de la dilatation thermique longitudinale du support (4), sous la forme d'une transmission à levier, qui comporte un corps dilatable (29) formé d'un matériau ayant un coefficient thermique de dilatation longitudinale différent de celui du matériau du support (4), le corps dilatable (29) s'appuyant contre un élément porteur (32) de la pointe réceptrice (5) qui est fixé de façon articulée sur le support (4).

9. Poupée à pointes selon la revendication 8, caractérisée en ce que le corps dilatable (29) est fixé par une extrémité sur le support (4) et est relié de façon articulée par son autre extrémité avec l'élément porteur (32) de la pointe réceptrice (5).

10. Poupée à pointes selon les revendications 8–9, caractérisée en ce que la pointe réceptrice (5) est agencée sous forme d'une pointe sphérique.

11. Poupée à pointes pour maintenir une pièce (8) serrée avec possibilité de rotation entre une pointe réceptrice (5) et une contre-pointe (6), comportant un support (4) guidé dans un guide longitudinal (9) qui porte la pointe réceptrice (5), caractérisée en ce que, pour le guidage du support (4), il est prévu un palier glissant (25–28), qui contient comme corps glissants des rouleaux (25a, b, c) dont les axes longitudinaux sont orientés parallèlement à la direction de guidage et qui sont fixés sur la partie guidée du support (4) de manière à se déplacer élastiquement perpendiculairement à la direction de guidage.

12. Poupée à pointes selon la revendication 11, caractérisée en ce que les rouleaux (25a, b, c–28a, b, c) sont fixés au moyen d'un mastic adhésif élastique sur la partie guidée du support (4).

Fig.1

Fig.2

# Fig.4

# Fig.3

Fig.6

ca 2 µm

Fig.7

Fig.8

Fig.9

Fig.10

# Fig.11

# Fig.12